**Europäisches Patentamt**

**European Patent Office**

**Office européen des brevets**

(19)

(11) Veröffentlichungsnummer: **0 175 678**
**B1**

# (12) EUROPÄISCHE PATENTSCHRIFT

(45) Veröffentlichungstag der Patentschrift:
**11.05.88**

(51) Int. Cl.⁴: **C 21 C 5/52,** F 27 B 3/08,
F 27 D 11/10

(21) Anmeldenummer: **85890221.6**

(22) Anmeldetag: **12.09.85**

(54) **Einrichtung an einem Elektroofen.**

(30) Priorität: **18.09.84  AT 2963/84**

(43) Veröffentlichungstag der Anmeldung:
**26.03.86 Patentblatt 86/13**

(45) Bekanntmachung des Hinweises auf die Patenterteilung:
**11.05.88 Patentblatt 88/19**

(84) Benannte Vertragsstaaten:
**BE CH DE FR GB IT LI LU NL SE**

(56) Entgegenhaltungen:
**DE - B - 1 216 900**
**DE - C - 638 867**
**US - A - 2 469 740**

(73) Patentinhaber: **VOEST-ALPINE Aktiengesellschaft,
Muldenstrasse 5, A-4020 Linz (AT)**

(72) Erfinder: **Die Erfinder haben auf ihre Nennung verzichtet**

(74) Vertreter: **Wolfram, Gustav, Dipl.-Ing.,
Schwindgasse 7 P.O. Box 205, A-1041 Wien (AT)**

## Beschreibung

Die Erfindung betrifft eine Einrichtung an einem Elektroofen mit einem von einem heb- und senkbaren Deckel abschliessbaren Ofengefäss, in das mindestens eine den Deckel durchsetzende Elektrode ragt, wobei die Elektrode an einer den Elektroofen überragenden sowie heb- und senkbaren Tragkonstruktion mittels einer Festklemmeinrichtung befestigbar ist.

Ein Elektroofen mit heb- und senkbarem Deckel und heb- und senkbaren, den Deckel durchsetzenden Elektroden ist aus der US-A-2 469 740 bekannt. Der Deckel des Ofengefässes ist bei dieser bekannten Einrichtung mittels eines eigenen Tragwerkes gehalten, das mittels eines eigenen Hubwerkes unabhängig von der Tragkonstruktion für die Elektroden heb- und senkbar ist, was einen hohen konstruktiven Aufwand darstellt.

Aus der DE-A-1 216 900 ist eine Einrichtung der eingangs beschriebenen Art für einen Elektroofen bekannt, die ein Kuppeln eines Deckeltragwerkes an eine Elektrodentragkonstruktion gestattet, so dass das die Elektrodentragkonstruktion betätigende Hubwerk auch zum Abheben des Deckeltragwerkes und damit des Deckels herangezogen werden kann. Nachteilig ist bei dieser Konstruktion jedoch die Verwendung zweier Tragkonstruktionen, nämlich einer für den Deckel und einer weiteren für die Elektrode. Beide Tragkonstruktionen erfordern eigene Führungselemente und Abstützungen zum Halten in Ruheposition, was den konstruktiven Aufwand weiter erhöht. Das Hubwerk muss zudem sehr stark dimensioniert sein, da es neben dem Deckel und den Elektroden sowohl die Deckel- als auch die Elektrodentragkonstruktion betätigen muss.

Die Erfindung bezweckt die Vermeidung dieser Nachteile und Schwierigkeiten und stellt sich die Aufgabe, eine Einrichtung für einen Elektroofen der eingangs beschriebenen Art zu schaffen, bei der mit dem Hubwerk zum Heben und Senken der Elektroden auch der Deckel heb- und senkbar ist, jedoch auf ein zusätzliches Deckeltragwerk verzichtet werden kann.

Erfindungsgemäss wird diese Aufgabe dadurch gelöst, dass — zwecks Abhebens des Deckels — am Deckel an der Durchtrittsöffnung der Elektrode eine weitere Festklemmeinrichtung für die Elektrode und an der Tragkonstruktion mindestens ein Kupplungselement angeordnet sind, das mit mindestens einem am Deckel befestigten Gegenkupplungselement in und ausser Eingriff bringbar ist.

Eine konstruktiv besonders einfache Ausführungsform ist dadurch gekennzeichnet, dass das Kupplungselement an dem unteren Ende eines Zugkräfte aufnehmenden, an der Tragkonstruktion mit seinem oberen Ende befestigten Verbindungselementes, wie eines Seils, einer Kette, Stange oder Lasche, befestigt und als Haken oder Öse ausgebildet ist.

Zwecks einfacher Manipulation ist vorteilhaft das Verbindungselement längenverstellbar.

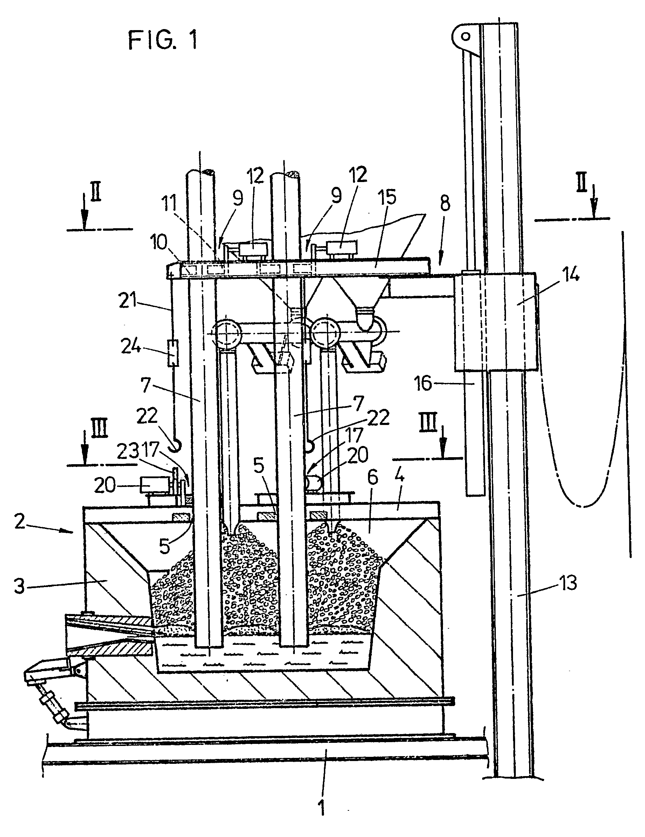

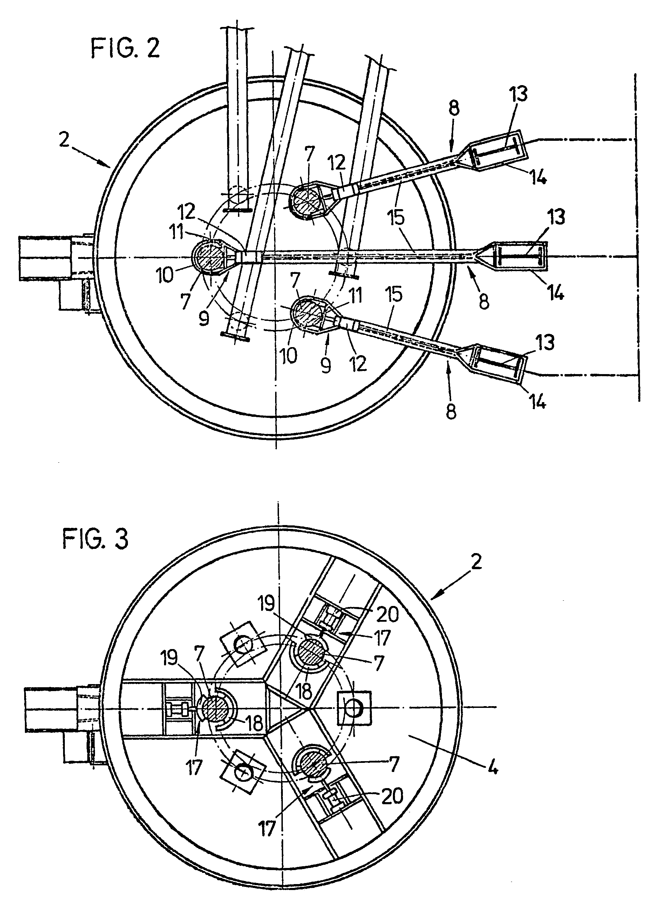

Die Erfindung ist nachfolgend anhand eines Ausführungsbeispieles näher erläutert, wobei Fig. 1 einen Schnitt durch einen Elektroofen in schematischer Darstellung, die Fig. 2 und 3 Schnitte gemäss den Linien II-II und III-III der Fig. 1 und die Fig. 4 bis 6 die Funktion der erfindungsgemässen Einrichtung an einem jeweils in Seitenansicht dargestellten Elektroofen zeigen.

Der auf einem nicht näher dargestellten ortsfesten Gerüst 1 angeordnete Elektroofen 2 weist ein feuerfest ausgekleidetes Ofengefäss 3 und einen dieses Ofengefäss 3 abschliessenden Deckel 4 auf. An dem Deckel sind Durchtrittsöffnungen 5 für in den Innenraum 6 des Ofengefässes 3 ragende Elektroden 7 vorgesehen, die im Betriebszustand diese Durchtrittsöffnungen 5 des Deckels 4 durchsetzen. Die Elektroden 7 sind jeweils an einer heb- und senkbaren Tragkonstruktion 8 mittels Festklemmeinrichtungen 9 in unterschiedlichen Höhenlagen befestigbar.

Die Festklemmeinrichtungen sind jeweils von einem die Elektrode 7 umgebenden Halb-Ring 10 gebildet, gegen den die Elektrode 7 mittels einer Stelleinrichtung 11, die mittels eines Druckmittelzylinders 12 betätigbar ist, pressbar ist.

Jede Tragkonstruktion 8 ist von einem entlang eines vertikalen Stehers 13 bewegbaren Schlitten 14 gebildet, an dem ein den Elektroofen überragender und bis zur entsprechenden Elektrode 7 reichender Kragträger 15 montiert ist. Zum Heben und Senken des Schlittens entlang des vertikalen Stehers 13 dient eine Hubeinrichtung 16, die beispielsweise als Druckmittelzylinder ausgebildet ist. Die Tragkonstruktion 8 der im dargestellten Ausführungsbeispiel vorgesehenen drei Elektroden 7 sind sowohl synchron als auch einzeln heb- und senkbar.

An den am Deckel 4 vorgesehenen Durchtrittsöffnungen 5 für die Elektroden 7 sind weitere Festklemmeinrichtungen 17 vorgesehen, die jeweils von dem Elektrodenquerschnitt angepassten Zangenbacken 18, 19 gebildet sind, von denen eine mittels eines Druckmittelzylinders 20 gegen die Elektrode 7 und umgekehrt bewegbar ist.

An jeder Tragkonstruktion 8 der Elektrode 7 ist ein Zugkräfte aufnehmendes Verbindungselement 21 montiert, dessen unteres Ende mit einem Haken 22 versehen ist. Unterhalb jedes Hakens ist eine am Deckel 4 befestigte Öse 23 vorgesehen. Die Verbindungselemente 21 sind vorzugsweise als längenverstellbare Stangen ausgebildet, wobei zur Längsverstellung jeweils ein Spannschloss 24 dient.

Die Funktion der erfindungsgemässen Einrichtung beim Abheben bzw. Absenken des Deckels 4 ist folgende:

Um den Deckel abzuheben, werden die am Deckel 4 angeordneten Festklemmeinrichtungen 17 für die Elektroden 7 gespannt und die an den Tragkonstruktionen 8 angeordneten Festklemmeinrichtungen 9 von den Elektroden 7 gelöst (Fig. 4). Danach werden die Tragkonstruktionen 8 synchron so weit gesenkt, bis die Haken 22 der Verbindungselemente 21 in die Ösen 23 des Deckels 4 eingehängt werden können, vgl. Fig. 5. Daraufhin können die Tragkonstruktionen 8 synchron unter Mitnahme des Deckels 4 und der Elektroden 7 vom Ofengefäss 3 abgehoben werden, wie dies in Fig. 6 veranschaulicht ist.

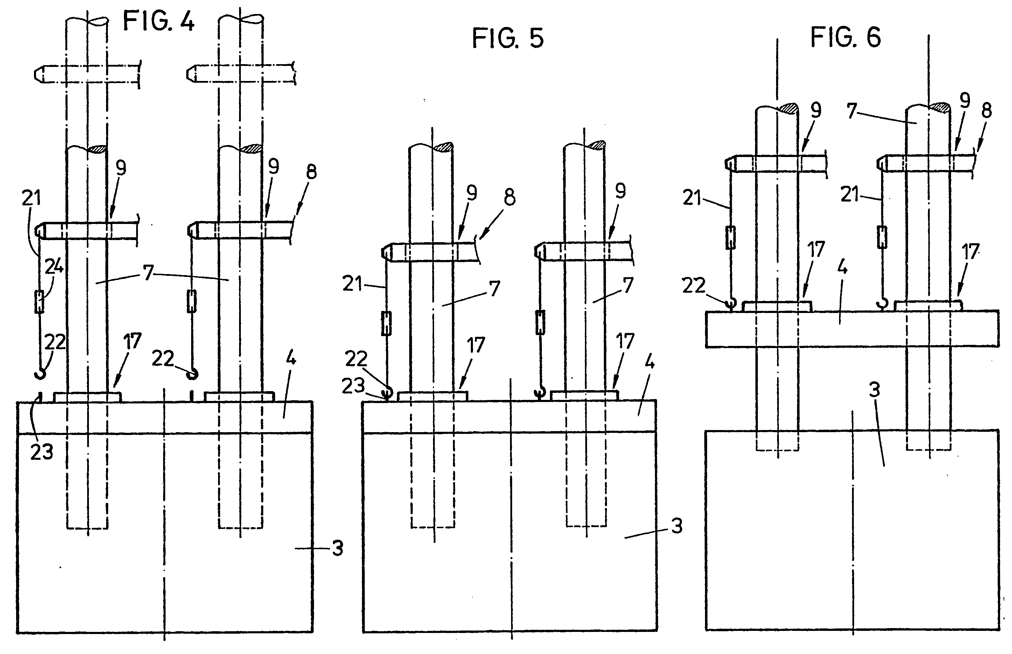

Der Aufsetzvorgang des Deckels 4 auf das Ofengefäss 3 erfolgt in umgekehrter Reihenfolge, wobei zunächst die Festklemmeinrichtungen 9 an den Tragkonstruktionen 8 gelöst und die am Deckel 4 vorgesehenen Festklemmeinrichtungen 17 gespannt sind. Die Tragkonstruktionen 8 werden synchron in die in Fig. 5 dargestellte Lage abgesenkt, worauf die Haken 22 mit den Ösen 23 ausser Eingriff gebracht werden und die Tragkonstruktionen 8 wiederum in die gewünschte Lage gehoben werden können.

Anschliessend werden die an den Tragkonstruktionen 8 vorgesehenen Festklemmeinrichtungen 9 gespannt und die am Deckel 4 vorgesehenen Festklemmeinrichtungen 17 gelöst, so dass die Elektroden 7 mit Hilfe der Tragkonstruktionen 8 zwecks Erzielung konstanter Eintauchtiefe entsprechend der Abbrandgeschwindigkeit in den Ofeninnenraum 6 abgesenkt werden können.

Die Spannschlösser 24 dienen dazu, eventuell vorhandene Längenunterschiede der Verbindungselemente 21 auszugleichen und den Deckel 4 in genau horizontaler Lage zu halten.

Die Erfindung beschränkt sich nicht auf das dargestellte Ausführungsbeispiel, sondern kann in verschiedener Hinsicht modifiziert werden. So ist es möglich, sämtliche Elektroden an einer einzigen gemeinsamen heb- und senkbaren Tragkonstruktion anzuordnen. Weiters lässt sich die Erfindung bei Elektroöfen mit beliebiger Anzahl von Elektroden verwirklichen.

**Patentansprüche**

1. Einrichtung an einem Elektroofen (2) mit einem von einem heb- und senkbaren Deckel (4) abschliessbaren Ofengefäss (3), in das mindestens eine den Deckel (4) durchsetzende Elektrode (7) ragt, wobei die Elektrode (7) an einer den Elektroofen (2) überragenden sowie heb- und senkbaren Tragkonstruktion (8) mittels einer Festklemmeinrichtung (9) befestigar ist, dadurch gekennzeichnet, dass — zwecks Abhebens des Deckels (4) — am Deckel (4) an der Durchtrittsöffnung (5) der Elektrode (7) eine weitere Festklemmeinrichtung (17) für die Elektrode (7) und an der Tragkonstruktion (8) mindestens ein Kupplungselement (22) angeordnet sind, das mit mindestens einem am Deckel (4) befestigten Gegenkupplungselement (23) in und ausser Eingriff bringbar ist.

2. Einrichtung nach Anspruch 1, dadurch gekennzeichnet, dass das Kupplungselement (22) an dem unteren Ende eines Zugkräfte aufnehmenden, an der Tragkonstruktion (8) mit seinem oberen Ende befestigten Verbindungselementes (21) befestigt und als Haken (22) oder Öse ausgebildet ist.

3. Einrichtung nach Anspruch 1 oder 2, dadurch gekennzeichnet, dass das Verbindungselement (21) längenverstellbar ist.

4. Einrichtung nach den Ansprüchen 1 bis 3, dadurch gekennzeichnet, dass das Verbindungselement (21) aus einem Seil, einer Kette, Stange oder Lasche besteht.

**Claims**

1. Arrangement at an electric furnace (2) with a furnace vessel (3) closeably by a liftable and lowerable lid (4) at least one electrode (7) penetrating through the lid (4) into the furnace vessel, the electrode (7) being fastenable to a liftable and lowerable supporting construction (8) extending above the electric furnace (2) by a clamping means (9), characterised in that — for lifting of the lid (4) — a further clamping means (17) for the electrode (7) is arranged at the lid (4) adjacent the aperture (5) penetrated by the electrode (7) and at least one coupling element (22) is arranged on the supporting construction (8), which is adapted to be brought into and out of engagement with at least one countercoupling element (23) fastened to the lid (4).

2. Arrangement accordingn to claim 1, characterised in that the coupling element (22) is fastened to the lower end of a tensile-force accommodating connecting element (21) fastened with its upper end to the supporting construction (8), which coupling element is designed as a hook (22) or an eye.

3. Arrangement according to claim 1 or 2, characterised in that the connecting element (21) is adjustable in length.

4. Arrangement according to claims 1 to 3, characterised in that the connecting element (21) consists of a rope, a chain, rod or bracket.

**Revendications**

1. Dispositif prévu sur un four électrique (2) possédant une carcasse de four (3) susceptible d'être fermée par un couvercle (4) relevable et abaissable et dans laquelle pénètre au moins une électrode (7) qui traverse le couvercle (4), l'électrode (7) pouvant être fixée au moyen d'un dispositif de blocage (9) à une construction de support (8) qui dépasse en haut du four électrique (2) et peut être relevée et abaissée, caractérisé en ce que, pour soulever le couvercle (4) de la carcasse, un dispositif de blocage supplémentaire (17) pour l'électrode (7) est disposé sur le couvercle (4), au droit de l'ouverture de traversée (5) de l'électrode (7), et au moins un élément d'accouplement (22) est disposé sur la construction de support (8) et peut être relié à au moins un élément d'accouplement coopérant (23) fixé au couvercle (4), ainsi que détaché de cet élément coopérant.

2. Dispositif selon la revendication 1, caractérisé en ce que l'élément d'accouplement (22) est fixé à l'extrémité inférieure d'un élément de liaison (21) supportant des efforts de traction et fixé par son extrémité supérieure à la construction de support (8), l'élément d'accouplement étant réalisé sous forme d'un crochet (22) ou d'un oeil.

3. Dispositif selon la revendication 1 ou 2, caractérisé en ce que l'élément de liaison (21) est réglable en longueur.

4. Dispositif selon les revendications 1 à 3, caractérisé en ce que l'élément de liaison (21) est formé d'un câble, d'une chaîne, d'une barre ou d'une attache.

FIG. 1

FIG. 2

FIG. 3

FIG. 4    FIG. 5    FIG. 6

0 175 678